(19) Europäisches Patentamt
European Patent Office
Office européen des brevets

(11) **EP 4 316 832 A1**

(12) **EUROPEAN PATENT APPLICATION**
published in accordance with Art. 153(4) EPC

(43) Date of publication:
**07.02.2024 Bulletin 2024/06**

(51) International Patent Classification (IPC):
**B32B 27/32** (2006.01)      **C08J 5/18** (2006.01)

(21) Application number: **22780899.5**

(52) Cooperative Patent Classification (CPC):
**B32B 27/32; C08J 5/18**

(22) Date of filing: **29.03.2022**

(86) International application number:
**PCT/JP2022/015384**

(87) International publication number:
**WO 2022/210688 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021059760**

(71) Applicant: **Toray Industries, Inc.**
**Tokyo 103-8666 (JP)**

(72) Inventors:
• **OKADA, Kazuma**
**Otsu-shi, Shiga 520-8558 (JP)**
• **OHKURA, Masatoshi**
**Otsu-shi, Shiga 520-8558 (JP)**
• **FUJIWARA, Satoshi**
**Otsu-shi, Shiga 520-8558 (JP)**

(74) Representative: **Mewburn Ellis LLP**
**Aurora Building**
**Counterslip**
**Bristol BS1 6BX (GB)**

(54) **POLYPROPYLENE FILM**

(57)     This polypropylene film is characterized in that the maximum value Dmax and the minimum value Dmin of tanδ in the main alignment direction within a range of -10°C to 50°C satisfy the relationship of formula 1, and that the tensile elongation in a main alignment orthogonal direction at 90°C is 70% or more.

$$\text{Formula 1: } 0.00 \leq (\text{Dmax} - \text{Dmin})/\text{Dmax} \leq 0.30$$

Provided is a polypropylene film capable of maintaining quality even after being subjected to a processing step at a high temperature.

Figure 1

**Description**

TECHNICAL FIELD

The present invention relates to a polypropylene film that is excellent in heat resistance, mechanical strength, and quality and can be suitably used for industrial material applications.

BACKGROUND ART

A polypropylene film is excellent in mold-releasing property of the surface and mechanical properties, and thus is suitably used as a release film or a film for processes for various members such as plastic products, building materials, and optical components. In addition, the polypropylene film is excellent in electrical properties, and thus is also suitably used for a capacitor film.

One of the required properties of the polypropylene film is heat resistance. For example, when a polypropylene film is used as a cover film for a thermosetting resin or the like, the polypropylene film may be exposed to a high temperature at a timing of thermal curing after being bonded to a film. When used as a capacitor film, the polypropylene film is exposed to a high temperature in a motor. In recent years, a high level of heat resistance of the polypropylene film has been increasingly required in such applications.

One of indices of heat resistance of the polypropylene film is thermal shrinkage. In general, in order to decrease the thermal shrinkage, a method of enhancing the crystallinity of polypropylene resin, a method of reducing the amount of the high-molecular-weight component, and a method of setting the stretching ratio high are employed. However, in the method of enhancing the crystallinity of polypropylene resin or the method of stretching at a high stretching ratio, the mechanical strength of the polypropylene film is improved, but the tensile elongation is lowered and the polypropylene film may be brittle. In addition, a low-molecular-weight polypropylene resin has a low melt tension when heated and softened, and a film made of the low-molecular-weight polypropylene resin may have a reduced tensile elongation. From the above, it has been conventionally difficult to obtain a polypropylene film having both high tensile elongation and low thermal shrinkage.

As a polypropylene film having improved heat resistance, for example, Patent Document 1 describes an example in which the thermal shrinkage stress is reduced by using a highly crystalline polypropylene resin and adjusting the temperature of a preheating roll during longitudinal stretching. In addition, Patent Documents 2 and 3 describe an example in which the thermal shrinkage is reduced by increasing the crystallinity using a polypropylene resin mainly having a low-molecular-weight component. Further, Patent Document 4 describes an example in which the withstand voltage at a high temperature is improved and the shrinkage stress is reduced by using a polypropylene resin having a low polypropylene component dissolved in xylene.

PRIOR ART DOCUMENTS

PATENT DOCUMENTS

Patent Document 1: International Publication No. 2020/196602
Patent Document 2: Japanese Patent Laid-open Publication No. 2014-55283
Patent Document 3: International Publication No. 2020/137791
Patent Document 4: Japanese Patent Laid-open Publication No. 2020-132882

SUMMARY OF THE INVENTION

PROBLEMS TO BE SOLVED BY THE INVENTION

However, the polypropylene films described in Patent Documents 1 and 4 have a problem of insufficient heat resistance. The polypropylene film described in Patent Document 2 also has a problem in that the tensile elongation in a direction orthogonal to the main orientation direction is low, and the film is easily broken when being conveyed at a high temperature and a high tension. The polypropylene film described in Patent Document 3 also has a problem in that the thermal shrinkage in the main orientation direction is high, the film shrinks when being conveyed at a high temperature, and wrinkles easily occur. Therefore, when these polypropylene films are used for applications requiring processing in a high-temperature environment, it is difficult to maintain the quality after the film undergoes a processing step at a high temperature. Therefore, the present invention solves the above-described problems, and an object of the present invention is to provide a polypropylene film capable of maintaining the quality even after being subjected to a processing step at a high temperature.

SOLUTIONS TO THE PROBLEMS

In order to solve the above-described problems, the polypropylene film of the present invention is a polypropylene film in which a maximum value Dmax and a minimum value Dmin of $\tan\delta$ in a main orientation direction within a range of -10°C or more and 50°C or less satisfy a relationship of Formula 1, and a tensile elongation in a direction orthogonal to the main orientation direction at 90°C is 70% or more:

$$\text{Formula 1:  } 0.00 \leq (\text{Dmax} - \text{Dmin})/\text{Dmax} \leq 0.30.$$

EFFECTS OF THE INVENTION

According to the present invention, it is possible to provide a polypropylene film capable of maintaining the quality even after being subjected to a processing step at a high temperature.

BRIEF DESCRIPTION OF THE DRAWINGS

Fig. 1 is an example of a graph showing the temperature dependence of $\tan\delta$ in the main orientation direction of a polypropylene film and shows Dmax and Dmin.
Fig. 2 is an example of a graph showing the temperature dependence of $\tan\delta$ in the main orientation direction of a polypropylene film, and shows Lp and a temperature at which $\tan\delta$ is equal to Lp.
Fig. 3 is an example of a graph of a crystallization temperature $T_{c0}$ of a polypropylene film.

EMBODIMENTS OF THE INVENTION

The polypropylene film of the present invention is a polypropylene film in which a maximum value Dmax and a minimum value Dmin of $\tan\delta$ in a direction orthogonal to a main orientation direction within a range of -10°C or more and 50°C or less satisfy a relationship of Formula 1, and a tensile elongation in a direction orthogonal to the main orientation direction at 90°C is 70% or more. Hereinafter, the polypropylene film of the present invention will be specifically described.

$$\text{Formula 1:  } 0.00 \leq (\text{Dmax} - \text{Dmin})/\text{Dmax} \leq 0.30.$$

The polypropylene film refers to a sheet-shaped molded body containing a polypropylene resin in an amount of more than 50% by mass and 100% by mass or less based on 100% by mass of all components constituting the film. The amount of the polypropylene resin in the polypropylene film is preferably 90% by mass or more and 100% by mass or less, more preferably 95% by mass or more and 100% by mass or less, still more preferably 96% by mass or more and 100% by mass or less, particularly preferably 97% by mass or more and 100% by mass or less, and most preferably 98% by mass or more and 100% by mass or less. The polypropylene film of the present invention may contain only one type of polypropylene resin, but preferably contains two or more types of polypropylene resins. When the film contains two or more types of polypropylene resins, if the total amount of these components is more than 50% by mass and 100% by mass or less, the polypropylene resin is regarded as a main component.

In addition, the polypropylene resin refers to a resin in which propylene units account for more than 50 mol% and 100 mol% or less of all the constituent units constituting the resin. In the present invention, a direction in which a polypropylene film is formed (a winding direction in the case of a film roll) is referred to as a film formation direction, a longitudinal direction, or an MD direction, and a direction orthogonal to the film formation direction in a film plane is referred to as a width direction or a TD direction.

In the polypropylene film of the present invention, it is important that the maximum value Dmax and the minimum value Dmin of $\tan\delta$ in the main orientation direction in the range of -10°C or more and 50°C or less satisfy the relationship of Formula 1 from the viewpoint of enhancing heat resistance that affects the quality after the film undergoes a processing step at a high temperature.

Formula 1: 0.00 ≤ (Dmax - Dmin)/Dmax ≤ 0.30.

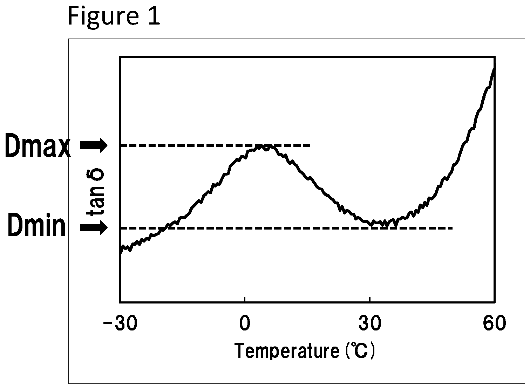

The tanδ is also called loss tangent and correlates with the degree of mobility of the molecular chain in the polypropylene film. In general, as shown in Fig. 1, tanδ is maximized at around 0°C, and when the temperature is increased to a high temperature, tanδ once decreases, then turns to rise again, and increases to a level exceeding the maximum value around 0°C. (Dmax - Dmin)/Dmax is an index indicating an amount by which tanδ once decreases from the maximum value around 0°C. The present inventors have found that suppressing the movement of the molecular chain in a wide temperature range by decreasing this value improves the heat resistance of the polypropylene film and suppresses the thermal shrinkage.

When the value of (Dmax - Dmin)/Dmax is more than 0.30, the thermal shrinkage of the polypropylene film increases. Therefore, for example, when such a polypropylene film is used as a release film, wrinkles may be formed when the polypropylene film is bonded to an adherend and passed through a high-temperature step, and the quality is impaired. From the above viewpoint, the value of (Dmax - Dmin)/Dmax is preferably 0.28 or less, more preferably 0.27 or less, still more preferably 0.25 or less, and particularly preferably 0.22 or less. The lower limit of the value of (Dmax - Dmin)/Dmax is substantially 0.00.

The value of (Dmax - Dmin)/Dmax can be measured by the following procedure using a dynamic viscoelasticity evaluation apparatus. First, a polypropylene film test piece having a width of 5 mm × a length of 20 mm cut out with the main orientation direction thereof as a long side is attached to chuck parts of the apparatus in a nitrogen atmosphere at 23°C. The test piece is once cooled to a low temperature of -60°C, and tanδ from the time point when the temperature reaches -50°C to the time point when the temperature reaches 150°C after the start of temperature rise is measured. Next, a viscoelasticity-temperature curve is drawn by a dynamic viscoelasticity method, Dmax and Dmin are determined using tanδ at each temperature, and (Dmax - Dmin)/Dmax is determined from these values. Note that tanδ can be measured by a known apparatus, for example, Rheogel-E4000 (manufactured by UBM), and conditions at that time are as shown in Examples.

In order to set the value of (Dmax - Dmin)/Dmax to 0.30 or less, for example, there can be used a method of setting the raw material composition of the polypropylene film to the range described later, and setting the film formation conditions to the ranges described later. In particular, it is effective to use a highly crystalline raw material having a narrow molecular weight distribution Mz/Mw, a greatly reduced amount of the high-molecular-weight component, and a low cold xylene soluble component (CXS), to set the surface temperature of a casting drum in a range of 10 to 40°C, and to cause the film to be drawn down in the conveyance direction on a high-temperature (80°C or more) roll after lateral stretching, thereby shrinking the film in the direction orthogonal to the main orientation direction.

In the polypropylene film of the present invention, it is important that the tensile elongation at 90°C in the direction orthogonal to the main orientation direction is 70% or more from the viewpoint of enhancing the mechanical strength that affects the stability of a processing step at a high temperature. Here, the direction orthogonal to the main orientation direction refers to a direction orthogonal to the main orientation direction in the plane of the film. The main orientation direction refers to a direction showing the highest value when the Young's modulus is measured in each direction forming an angle of 0° to 175° at intervals of 5° with respect to an arbitrary direction defined as 0° in the plane of the film. The Young's modulus can be measured using a tensile tester, and the details of the measurement method are shown in Examples. When the width of a sample is less than 50 mm and the Young's modulus cannot be obtained by a tensile tester, the crystal orientation of the α crystal (110) plane of the polypropylene film by wide-angle X-ray is measured as follows and taken as the main orientation direction based on the following criteria. That is, an X-ray (CuKα ray) is incident in a direction perpendicular to a film surface, a crystal peak at 20 = about 14° (α crystal (110) plane) is scanned in a circumferential direction, a direction in which the diffraction intensity of the obtained diffraction intensity distribution is the highest is defined as a main orientation direction, and a direction orthogonal thereto is defined as a direction orthogonal to the main orientation direction.

For example, when a polypropylene film having a tensile elongation in the direction orthogonal to the main orientation direction at 90°C of less than 70% is used as a release film, high tension is applied to the film in the direction orthogonal to the main orientation direction when the polypropylene film is bonded to an adherend and allowed to pass through a high-temperature step, which may cause the film to be broken. From the above viewpoint, the tensile elongation in the direction orthogonal to the main orientation direction at 90°C is preferably 90% or more, more preferably 110% or more, and still more preferably 1300 or more. On the other hand, the upper limit of the tensile elongation in the direction orthogonal to the main orientation direction at 90°C is not particularly limited, but is substantially about 400%.

The tensile elongation in the direction orthogonal to the main orientation direction at 90°C can be measured by the following procedure using a tensile tester equipped with an oven that enables heating at a high temperature. First, a polypropylene film is cut into a rectangle of 150 mm (direction orthogonal to the main orientation direction) × 10 mm (main orientation direction) to obtain a sample. Next, the sample is set in a tensile tester with an initial distance between chucks of 50 mm, placed in an oven heated to 90°C together with the chucks, and heated for 1 minute. Thereafter, a tensile test is performed at a tensile speed of 300 mm/min, and the elongation at break of the sample is read and defined as the tensile elongation. Note that the tensile tester may be any tester as long as measurement can be performed, and for example, "TENSILON" (registered trademark) UCT-100 manufactured by Orientec Co., Ltd. or the like can be used.

Generally, when the ratio of the high-molecular-weight component in the polypropylene film is reduced, it is difficult to propagate the tension to the entire film when high tension is applied, and the tensile elongation tends to decrease. In addition, if the ratio of a highly crystalline polypropylene resin having a low cold xylene soluble component (CXS) is increased, amorphous components that relax stress when tension is applied is insufficient, and the tensile elongation is further decreased.

Therefore, it has been conventionally difficult to enhance the heat resistance while maintaining the tensile elongation. However, the present inventors have found that the tensile elongation in the direction orthogonal to the main orientation direction at 90°C can be set to 70% or more by, for example, using a method of setting the raw material composition of the polypropylene film to the range described later and setting the film formation conditions to the ranges described later. In particular, it is effective that the stretching section during longitudinal stretching is lengthened (for example, 200 mm or more), and both surfaces of the film are stretched while being sufficiently heated with a radiation heater or the like in the stretching section, so that longitudinal stretching is uniformly performed while the stretching stress is lowered, or the relaxation rate is increased (for example, 120 or more) in the relaxation treatment after lateral stretching, and heating is performed with a hot roll when the film passes through the winding process.

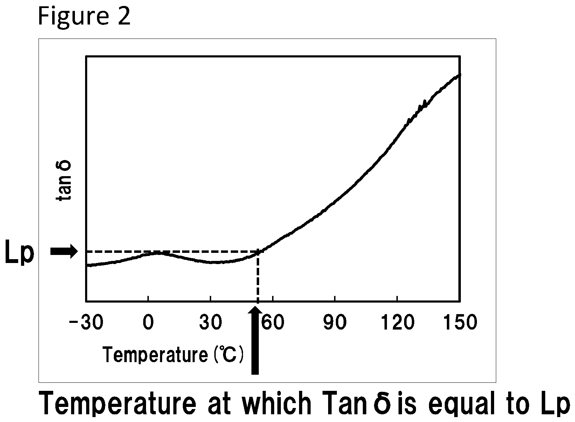

From the viewpoint of heat resistance, in the polypropylene film of the present invention, a temperature at which tanδ in the main orientation direction is equal to $L_P$ in a range of 30°C or more and less than 150°C is preferably 80°C or less, where $L_P$ is the maximum value of tanδ in the main orientation direction at -30°C or more and less than 30°C. The temperature is more preferably 70°C or less, still more preferably 60°C or less, and particularly preferably 55°C or less. The temperature at which tanδ in the main orientation direction is equal to $L_P$ corresponds to a temperature at which tanδ starts to exceed the maximum value around 0°C as shown in Fig. 2. The present inventors have found that the heat resistance of the polypropylene film is enhanced by suppressing this temperature to be low. When the temperature at which tanδ in the main orientation direction is equal to $L_P$ is 80°C or less, shrinkage of the film in the direction orthogonal to the main orientation direction is reduced during a process of winding up the polypropylene film as a roll and storing the film at a high temperature. Thus, occurrence of wrinkles in the polypropylene film roll is suppressed. As a result, the quality of the polypropylene film roll can be maintained high.

In order to set the temperature at which tanδ in the main orientation direction is equal to $L_P$ to 80°C or less, or in the above preferred range, a method of setting the raw material composition of the polypropylene film to the range described later can be used. In particular, it is preferable to use a highly crystalline raw material having a narrow molecular weight distribution Mz/Mw, a greatly reduced amount of the high-molecular-weight component, and a low CXS. The lower limit of the temperature at which tanδ in the main orientation direction is equal to $L_P$ is substantially 30°C.

From the viewpoint of heat resistance, in the polypropylene film of the present invention, the sum of crystallite sizes of α(110) in the main orientation direction and the direction orthogonal to the main orientation direction is preferably 20.0 nm or less. The sum of crystallite sizes is more preferably 18.0 nm or less, still more preferably 17.0 nm or less, and particularly preferably 16.0 nm or less. When the sum of the crystallite sizes of α(110) in the main orientation direction and the direction orthogonal to the main orientation direction is 20.0 nm or less, shrinkage in the direction orthogonal to the main orientation direction is reduced during a process of winding up the polypropylene film as a roll and storing the film at a high temperature. Thus, occurrence of wrinkles in the polypropylene film roll is suppressed. As a result, the quality of the polypropylene film roll can be maintained high. From the above viewpoint, the lower limit of the sum of the crystallite sizes of α(110) in the main alignment direction and the direction orthogonal to the main orientation direction is not particularly limited, but is substantially about 10 nm.

In addition, setting the sum of the crystallite sizes of α(110) in the main orientation direction and the direction orthogonal to the main orientation direction to be smaller than 20.0 nm suppresses the size of the amorphous region between crystals in the polypropylene film. Therefore, suppressing the size of the amorphous region as described above brings various advantages when the polypropylene film is used for various applications. For example, in the case of using the polypropylene film as a release film, when the polypropylene film is bonded to an adherend and allowed to pass through a high-temperature step, and then the polypropylene film is peeled off from the adherend, the mold-releasing property of the polypropylene film is kept high to reduce a decrease in productivity. The crystallite size of α(110) can be measured by X-ray diffraction, and the details of the measurement method are shown in Examples.

In order to set the sum of the crystallite sizes of α(110) in the main orientation direction and the direction orthogonal to the main orientation direction to 20.0 nm or less or the above preferred range, for example, there can be used a method of setting the raw material composition of the polypropylene film to the range described later, and setting the film formation conditions to the ranges described later. In particular, it is effective to reduce the size of spherulites formed during casting by using a raw material having a high crystallization temperature, to increase the effect of cooling during casting by setting the extrusion temperature and the temperature of a casting drum to low temperatures, and to lengthen the stretching section during longitudinal stretching and stretch the film while sufficiently heating both surfaces of the film with a radiation heater in the stretching section.

From the viewpoint of achieving both improvement in heat resistance and reduction in formation of coarse spherulites, the polypropylene film of the present invention preferably satisfies $Tc_0 + Tm \geq 280$ where $Tc_0$ (°C) is a crystallization temperature at a cooling rate of 0°C/min determined by an extrapolation point method using a crystallization temperature $Tc_{10}$ (°C) measured at a cooling rate of 10°C/min and a crystallization temperature $Tc_{40}$ (°C) measured at a cooling rate of 40 °C/min, and Tm (°C) is a melting point of the polypropylene film. The value of $Tc_0 + Tm$ is more preferably 285 or more, and still more preferably 290 or more. $Tc_0$ is an index of ease of crystallization, and high $Tc_0$ means that crystallization occurs more easily. In addition, Tm is the melting point of the polypropylene film, and high Tm means that the heat resistance of the polypropylene film is high. When the value of $Tc_0 + Tm$ is 280 or more, the crystallization rate is appropriately maintained, and coarse spherulites are hardly formed during casting. As a result, a decrease in elongation at break in the direction orthogonal to the main orientation direction and an increase in crystallite size are suppressed. From the above viewpoint, the upper limit of the value of $Tc_0 + Tm$ is not particularly limited, but is substantially about 350.

In order to set the value of $Tc_0 + Tm$ to 280 or more or the above preferable range, methods for increasing $Tc_0$ and Tm can be used singly or in combination. In order to increase $Tc_0$, a method of setting the composition of the polypropylene film to the range described later can be used. In particular, it is preferable to add a component having a nucleating agent action, and among them, it is preferable to add a branched polypropylene resin. In order to increase Tm, for example, there can be used a method of setting the composition of the polypropylene film in the range described later and setting the film formation conditions in the ranges described later. With regard to the composition, in particular, it is preferable to use a highly crystalline raw material having a low cold xylene soluble component (CXS). With regard to film formation conditions, it is also effective that the stretching section during longitudinal stretching is lengthened, and both surfaces of the film are stretched while being sufficiently heated with a radiation heater in the stretching section, so that longitudinal stretching is uniformly performed while the stretching stress is lowered.

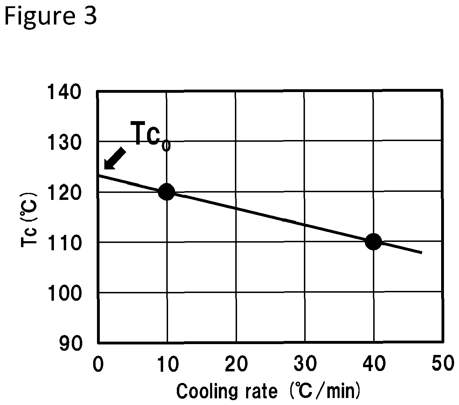

$Tc_{10}$, $Tc_{40}$, and $Tc_0$ can be measured by a differential scanning calorimeter (DSC), and a specific measurement method thereof is as follows. First, using a DSC, 3 mg of a polypropylene film is heated from 25°C to 250°C at 20 °C/min in a nitrogen atmosphere, and held for 5 minutes. Subsequently, the temperature is lowered from 250°C to 25°C at 10 °C/min, and the peak temperature of the exothermic curve obtained at this temperature lowering is defined as $T_{c10}$. Further, the polypropylene film is heated from 25°C to 250°C at 20 °C/min and held for 5 minutes. Thereafter, the temperature is lowered from 250°C to 25°C at 40 °C/min, and the peak temperature of the exothermic curve obtained at this temperature lowering is defined as $T_{c40}$. $Tc_{10}$ and $Tc_{40}$ measured in this manner are plotted with the cooling rate as the horizontal axis and the crystallization temperature obtained at each cooling rate as the vertical axis. Then, as shown in Fig. 3, a straight line passing from $T_{c40}$ to $T_{c10}$ is drawn, and the crystallization temperature at which the cooling rate is 0 °C/min is defined as $T_{c0}$. The DSC is not particularly limited as long as the above measurement can be performed, and a known DSC can be used. As a specific example, EXSTAR DSC6220 manufactured by Seiko Instruments Inc. can be given (the same applies to the measuring apparatus for Tm described later).

Tm can be measured by a differential scanning calorimeter (DSC), and a specific measurement method thereof is as follows. Using a DSC, 3 mg of a polypropylene film is heated from 25°C to 250°C at 20 °C/min in a nitrogen atmosphere, and the peak temperature of an endothermic curve obtained at this heating is defined as Tm.

The polypropylene film of the present invention preferably has a coefficient of static friction $\mu s$ of 0.80 or less after being heated at 90°C for 10 minutes from the viewpoint of enhancing the flatness during heating and improving the processing suitability after the heating step. Here, the coefficient of static friction $\mu s$ of 0.80 or less means that the coefficient of static friction us is 0.80 or less when different surfaces (front and back surfaces) of films are stacked with each other and measured (the same applies to a preferable range described later). The coefficient of static friction $\mu s$ after heating at 90°C for 10 minutes is more preferably 0.70 or less, and still more preferably 0.60 or less. For example, when the polypropylene film is used as a release film for a thermosetting resin film, there is a case where the polypropylene film is bonded to a sheet-shaped thermosetting resin, and then the thermosetting resin is cured in a temperature range of about 80°C to 100°C. In general, the polypropylene film has lower heat resistance than a polyester film that is often used as a film for processes such as a release film. In a scene where heat of about 90°C is applied to the polypropylene film, the film surface thereof is softened, and the lubricity of the film may be deteriorated. When the coefficient of static friction $\mu s$ after heating is set to 0.8 or less, in the case of using the polypropylene film as, for example, a release film, the film slides on a conveying roll and stress is uniformly distributed at the timing when the film passes through a high-temperature step. This makes it possible to reduce wrinkles and winding deviation which occurs at the timing when the film is wound up together with an adherend.

In order to set the coefficient of static friction $\mu s$ after heating at 90°C for 10 minutes to 0.80 or less or the above preferred range, for example, there can be used a method of setting the composition of the polypropylene film to the range described later, and setting the film formation conditions to the ranges described later. In particular, a method of alloying an olefin resin such as a poly(4-methylpentene)-1-based resin on a surface layer of a polypropylene film to form fine protrusions on the surface thereof, and a method of forming spherulites during casting by raising the temperature of a casting drum, thereby forming protrusions after biaxial stretching are effective. The lower limit of the coefficient of static friction $\mu$s after heating is not particularly limited, but is substantially about 0.1. The coefficient of static friction $\mu$s after heating can be measured in accordance with JIS K 7125 (1999).

The polypropylene film of the present invention preferably has a tensile elongation of 35% or more in the main orientation direction. The tensile elongation in the main orientation direction is 35% or more, whereby breakage of the polypropylene film can be reduced when the polypropylene film is unwound and used from a roll around which the polypropylene film is wound. From the above viewpoint, the tensile elongation in the main orientation direction is preferably 40% or more, more preferably 50% or more, and still more preferably 60% or more. On the other hand, the upper limit of the tensile elongation in the main orientation direction is not particularly limited, but is substantially about 1,000%. The tensile elongation in the main orientation direction is evaluated using a tensile tester, and the details will be described later.

If the stretching ratio is increased in order to increase the mechanical strength or high stress stretching is performed at a low temperature, the tensile elongation is generally likely to decrease. In addition, if the ratio of a highly crystalline polypropylene resin having a low cold xylene soluble component (CXS) is increased, amorphous components that relax stress when tension is applied is insufficient, and the tensile elongation is further decreased. Therefore, it has been conventionally difficult to maintain the tensile elongation while using a highly crystalline raw material. However, the present inventors have found that the tensile elongation in the main orientation direction can be set to 35% or more, for example, by using a method of setting the raw material composition of the polypropylene film to the range described later and setting the film formation conditions to the ranges described later. In particular, it is effective that the stretching section during longitudinal stretching is lengthened (for example, 200 mm or more), and both surfaces of the film are stretched while being sufficiently heated with a radiation heater or the like in the stretching section, so that longitudinal stretching is uniformly performed while the stretching stress is lowered, or the relaxation rate is increased (for example, 120 or more) in the relaxation treatment after lateral stretching, and heating is performed with a hot roll when the film passes through the winding process.

In the polypropylene film of the present invention, the maximum height St of both surfaces of the film is preferably less than 2.0 um. The maximum height St of both surfaces of the film is more preferably less than 1.5 um, still more preferably less than 1.0 um, and particularly preferably less than 0.5 um. When the maximum height St of both surfaces of the film is less than 2.0 um, it is possible to reduce deterioration in quality such as transfer of recesses to an adherend due to contact of protrusions on the surface of the polypropylene film with the adherend when the polypropylene film is bonded to the adherend and wound up as a film roll. The lower limit of the maximum height St of both surfaces of the film is not particularly limited, but is substantially about 0.01 $\mu$m.

In order to set the maximum height St of both surfaces of the film to less than 2.0 um or in the above preferable range, for example, there can be used a method of setting the composition of the polypropylene film to the range described later and setting the film formation conditions to the ranges described later. In particular, it is effective that spherulites in an unstretched sheet are homogeneously refined by setting the surface temperature of the casting drum to a range of 10 to 40°C, and then the stretching section during longitudinal stretching is lengthened, and stretching is performed while sufficiently heating both surfaces of the film with a radiation heater in the longitudinal stretching section, thereby longitudinally stretching the film uniformly while reducing stretching stress.

The thickness of the polypropylene film of the present invention is appropriately adjusted depending on the application, and is not particularly limited, but is preferably 0.5 um or more and 100 um or less from the viewpoint of handleability. The upper limit of the thickness is more preferably 60 $\mu$m, still more preferably 30 $\mu$m, and particularly preferably 16 um. The lower limit is more preferably 0.9 um, more preferably 1.5 um, still more preferably 4.0 um, particularly preferably 8.0 um, and most preferably 11 um. The thickness of the polypropylene film can be adjusted by the screw rotation speed of the extruder, the width of the unstretched sheet, the film formation speed, the stretching ratio, and the like within a range in which other physical properties are not deteriorated. The thickness of the polypropylene film can be measured with a known micro thickness meter.

The polypropylene film of the present invention preferably has a molecular weight distribution Mz/Mw of less than 4.5, more preferably 4.0 or less, and still more preferably 3.5 or less. The lower limit of Mz/Mw of the polypropylene film is substantially about 1.5. When the Mz/Mw of the polypropylene film is less than 4.5, the amount of the high-molecular-weight component that is relaxed when heated is small, and the heat resistance of the polypropylene film is maintained. As a method of setting the molecular weight distribution Mz/Mw of the polypropylene film to the above value, there are preferably used a method of adjusting the hydrogen gas concentration when the polypropylene resin is polymerized, a method of selecting a catalyst and/or a co-catalyst, a method of appropriately adjusting the composition and polymerization amount of each polymerization tank of continuous polymerization, and the like.

Hereinafter, a polypropylene resin (polypropylene resin A) suitable as a component most contained in the polypropylene film of the present invention will be described. The polypropylene resin A is preferably a linear polypropylene resin from the viewpoint of productivity and film characteristics.

The molecular weight distribution Mz/Mw of the polypropylene resin A is preferably less than 4.2, more preferably 3.7 or less, and still more preferably 3.2 or less. The lower limit of Mz/Mw of the polypropylene resin A is substantially about 1.2. When the Mz/Mw of the polypropylene resin A is less than 4.2, the amount of the high-molecular-weight component that is relaxed when heated is small, and the heat resistance of the polypropylene film is maintained. As a method for setting the molecular weight distribution Mz/Mw of the polypropylene resin A to the above value, there are preferably used a method of adjusting the hydrogen gas concentration during polymerization, a method of selecting a catalyst and/or a co-catalyst, a method of appropriately adjusting the composition and polymerization amount of each polymerization tank of continuous polymerization, and the like.

The melt flow rate (MFR) of the polypropylene resin A is preferably in the range of 2 g/10 min or more and 20 g/10 min or less (230°C, 21.18 N load) from the viewpoint of increasing film formability and film strength. The lower limit of the MFR is more preferably 2.5 g/10 min, and still more preferably 3.0 g/10 min. The upper limit is more preferably 10 g/10 min, still more preferably 8.0 g/10 min, and most preferably 6.5 g/10 min. In order to set the MFR of the polypropylene resin A to the above value, a method of controlling the average molecular weight or molecular weight distribution is adopted. More specifically, there are preferably used a method of adjusting the hydrogen gas concentration at the time of polymerization, a method of appropriately selecting a catalyst and/or a co-catalyst and selecting the composition to control the molecular weight and molecular weight distribution of the polypropylene resin, and the like. Reducing the amount of the high-molecular-weight component increases the MFR.

The polypropylene resin A preferably has a CXS of 3.5% by mass or less. Satisfying these conditions improves deterioration of dimensional stability and heat resistance of the resulting polypropylene film. Here, the CXS refers to a polypropylene component dissolved in xylene when a sample is completely dissolved in xylene and then precipitated at room temperature. The CXS is considered be a component that is difficult to crystallize due to low stereoregularity, low molecular weight, or the like. When such a component is contained in the polypropylene resin A, the thermal dimensional stability of the resulting polypropylene film may be deteriorated. Therefore, from the above viewpoint, the CXS is more preferably 2.0% by mass or less. The CXS is preferably as low as possible, but the lower limit is substantially about 0.1% by mass. As a method for setting the CXS to the above preferable range, there can be used a method of adjusting a polymerization catalyst and process polymerization conditions, a method of enhancing catalytic activity in obtaining the polypropylene resin A, a method of washing the obtained resin with a solvent or a propylene monomer itself, or the like.

In the molecular weight distribution curve measured by gel permeation chromatography, the differential distribution value when the logarithmic molecular weight Log (M) of the polypropylene resin A is 6.5 is preferably 0.2% or more and 9.5% or less. The upper limit is more preferably 8.0%, still more preferably 6.5%, and most preferably 5.0%. The differential distribution value when the logarithmic molecular weight Log (M) is 6.5 is 0.2% or more, whereby a high-molecular-weight component to be a tie molecule during stretching is sufficiently present, and uniformity during stretching is enhanced. In contrast, the differential distribution value when the logarithmic molecular weight Log (M) is 6.5 is 9.5% or less, whereby molecular chains that are relaxed when the polypropylene film is heated are reduced, and the thermal shrinkage is reduced. In addition, after the polypropylene film is wound up as a roll, normal temperature shrinkage over time is also suppressed, and the flatness of the film roll is maintained.

The polypropylene resin A may contain a copolymerization component and the like with another unsaturated hydrocarbon as long as the object of the present invention is not impaired. Examples of a monomer component constituting such a copolymerization component include ethylene, 1-butene, 1-pentene, 3-methylpentene-1,3-methylbutene-1,1-hexene, 4-methylpentene-1,5-ethylhexene-1,1-octene, 1-decene, 1-dodecene, vinylcyclohexene, styrene, allylbenzene, cyclopentene, norbornene, and 5-methyl-2-norbornene. The copolymerization amount is preferably less than 10 mol%, more preferably 5 mol% or less, still more preferably 3 mol% or less, and most preferably 1 mol% or less when the total amount of constituent units constituting the polypropylene resin A is 100 mol% from the viewpoint of dimensional stability in the form of a polypropylene film.

The content of the ethylene unit as a copolymerization component of the polypropylene resin A is preferably 5 mol% or less when the total amount of constituent units constituting the polypropylene resin A is 100 mol%. The content is more preferably 3 mol% or less, and still more preferably 1 mol% or less. As the content of the ethylene unit is large, the crystallinity is decreased to make it easier to improve the transparency when the resin is formed into a film, but the strength and heat resistance decrease. Setting the ethylene unit in the polypropylene resin A to 5 mol% or less reduces a decrease in strength when the polypropylene resin A is formed into a polypropylene film and deterioration in thermal shrinkage associated with a decrease in heat resistance. In addition, setting the ethylene unit in the polypropylene resin A to 5 mol% or less also reduce deterioration of the resin during the extrusion step, and suppresses generation of fish-eyes when the polypropylene resin A is formed into a polypropylene film.

The polypropylene resin A is linear polypropylene, and preferably satisfies the above preferred conditions. Examples of such a polypropylene resin include F-704NP, F-704NT, F-300SP, F113G, E-100GPL, E-105GM, E-200GP, E-203GP, Y-400GP, and E111G, which are polypropylene resins manufactured by Prime Polymer Co., Ltd., and FLX80E4, WF836DG3, FS2011DG3, D101, and W101, which are polypropylene resins manufactured by Sumitomo Chemical Co., Ltd.

The polypropylene film of the present invention may contain a branched polypropylene resin in addition to the linear polypropylene resin A. The branched polypropylene resin has an $\alpha$-crystal or $\beta$-crystal nucleating agent effect. Therefore, containing the branched polypropylene resin suppresses the formation of coarse spherulites during casting by the nucleating agent effect, thereby making it possible to increase the heat resistance and tensile elongation of a polypropylene film formed from such a resin, and further reduces the crystallite size.

The MFR of the branched polypropylene resin is preferably 0.5 g/10 min or more and 9 g/10 min or less (230°C, 21.18 N load) from the viewpoint of extrusion stability. The lower limit of the MFR of the branched polypropylene resin is more preferably 2 g/10 min, and still more preferably 6 g/10 min. The upper limit of the MFR of the branched polypropylene resin is more preferably 8 g/10 min. As a method for setting the MFR of the branched polypropylene resin to the above value, a method for controlling the average molecular weight and the molecular weight distribution or the like is employed. More specifically, there are preferably used a method of adjusting the hydrogen gas concentration at the time of polymerization, a method of appropriately selecting a catalyst and/or a co-catalyst and selecting the composition to control the molecular weight and molecular weight distribution of the polypropylene resin, and the like. The MFR is an index of the fluidity of the resin, and indicates the amount of the resin extruded from the cylinder under a constant temperature and load, and a lower viscosity of the resin indicates a higher MFR. In general, the molecular weight correlates with the viscosity, and as the absolute value of the molecular weight is low, the viscosity of the resin is low, resulting in a high value of the MFR.

The melt tension of the branched polypropylene resin is preferably 3 gf or more and 40 gf or less from the viewpoint of stretching uniformity. The lower limit of the melt tension is more preferably 4 gf, and still more preferably 6 gf. The upper limit is more preferably 30 gf, and still more preferably 25 gf. As a method for setting the melt tension to the above value, a method for controlling the average molecular weight, the molecular weight distribution, the degree of branching in the polypropylene resin, or the like is employed. In particular, in the case of having a long chain branch, the melt tension can be dramatically increased, and the value of the melt tension can be adjusted to a preferable value by using a polypropylene resin having a molecular chain of the long chain branch or adjusting the degree of branching.

A plurality of types of branched polypropylene resins such as a Ziegler-Natta catalyst type and a metallocene-based catalyst type are commercially available. From the viewpoint of using the branched polypropylene resin in combination with the polypropylene resin A, it is more preferable to compensate for the stretchability by adding a small amount of the Ziegler-Natta catalyst-based branched polypropylene resin having a wide molecular weight distribution.

The polypropylene film of the present invention can contain various resins different from polypropylene as long as the object of the present invention is not impaired. Of these, a polyolefin-based resin is preferable because it has high affinity with a polypropylene resin and can improve dispersibility in the polypropylene resin. As the polyolefin-based resin, for example, containing a poly(4-methylpentene)-1-based resin (PMP), a cyclic olefin polymer (COP), a cyclic olefin copolymer (COC), an $\alpha$-olefin-based elastomer, and the like can form fine projection shapes on the film surface, and can enhance lubricity. Of these, a poly(4-methylpentene)-1-based resin (PMP) is preferably used because it has particularly high affinity with a polypropylene resin.

From the viewpoint of imparting lubricity, the resin different from polypropylene is preferably added to the surface layer in the case of a laminated film. The amount thereof is preferably 0.1 to 20 parts by mass, more preferably 0.1 to 15 parts by mass, still more preferably 0.1 to 10 parts by mass, and particularly preferably 0.1 to 5.0 parts by mass relative to the total amount of the polypropylene resin in the surface layer. In the case of a single layer film, the amount of the resin is preferably 0.1 to 10 parts by mass, more preferably 0.1 to 5.0 parts by mass, still more preferably 0.1 to 3.0 parts by mass, and particularly preferably 0.1 to 1.0 part by mass relative to the total amount of the polypropylene resin. When the amount added of the resin different from polypropylene is too large, the transparency of the film may be deteriorated, or heat resistance and rigidity may be deteriorated. In addition, when the amount added is too small, the effect of imparting lubricity may be poor.

The polypropylene film of the present invention can contain various additives, for example, a crystal nucleating agent, an antioxidant, a heat stabilizer, a sliding agent, an antistatic agent, an antiblocking agent, a filler, a viscosity modifier, a coloring inhibitor, and the like as long as the object of the present invention is not impaired.

Of these, selection of the type and amount added of the antioxidant is important from the viewpoint of bleeding out of the antioxidant. That is, the antioxidant is preferably a phenol-based antioxidant having steric hindrance, and at least one of the antioxidants is preferably a high molecular weight type having a molecular weight of 500 or more. Specific examples thereof include various examples, and for example, it is preferable to use 2,6-di-t-butyl-p-cresol (BHT: molecular weight 220.4) singly or in combination with 1,3,5-trimethyl-2,4,6-tris(3,5-di-t-butyl-4-hydroxybenzyl)benzene (for example, "Irganox" (registered trademark) 1330: molecular weight 775.2, manufactured by BASF) or tetrakis[methylene-3(3,5-di-t-butyl-4-hydroxyphenyl)propionate]methane (for example, "Irganox" (registered trademark) 1010: molecular weight 1177.7, manufactured by BASF).

The total content of these antioxidants is preferably in the range of 0.01 to 1.0 parts by mass relative to the total amount of the polypropylene resin. If the amount of the antioxidant is too small, the polymer may be deteriorated in the extrusion step and the film may be colored, or the long-term heat resistance may be poor. When the amount of the antioxidant is too large, transparency may be deteriorated due to bleeding out of the antioxidant. From the above viewpoint, the content of the antioxidant is more preferably 0.05 to 0.90 parts by mass, and particularly preferably 0.10 to 0.80 parts by mass.

The polypropylene film of the present invention may contain a crystal nucleating agent within a range contradictory to an object. Specific examples of the crystal nucleating agent include an α-crystal nucleating agent (dibenzylidene sorbitols, sodium benzoate, phosphoric acid ester metal salts, and the like) and a β-crystal nucleating agent (amide-based compounds such as potassium 1,2-hydroxystearate, magnesium benzoate, and N,N'-dicyclohexyl-2,6-naphthalenedicarboxamide, and quinacridone-based compound). However, the excessive addition of the other type of the nucleating agent may cause a decrease in transparency and strength due to a decrease in stretchability, void formation, or the like. Therefore, the amount added is typically 0.5 parts by mass or less, preferably 0.1 parts by mass or less, and more preferably 0.05 parts by mass or less relative to 100 parts by mass of the total amount of the propylene resin, and it is preferable that the nucleating agent is not substantially contained.

The polypropylene film of the present invention preferably does not contain inorganic particles. The polypropylene resin that can be preferably used as a main component of the polypropylene film of the present invention has low affinity with inorganic particles. Thus, the inorganic particles may fall off from the film in the production process and contaminate the production line and the product. In addition, coarse protrusions are formed by inorganic particles having high hardness, which may transfer irregularities to the resin layer of the optical member. This may cause deterioration in quality when used as a protective film or a base film for production of a product requiring high quality such as a display member. From the above viewpoints, the polyolefin film of the present invention preferably does not contain a lubricant such as organic particles.

In the polypropylene film of the present invention, the ratio of the polypropylene resin A and the branched polypropylene resin to the total amount of the resin components is preferably as follows. The amount of the polypropylene resin A is preferably more than 50% by mass and 99.9% by mass or less from the viewpoint of heat resistance and mechanical strength of the film. The lower limit of the ratio of the polypropylene resin A is more preferably 60% by mass, and still more preferably 70% by mass. The upper limit is more preferably 99% by mass, and still more preferably 98% by mass. When the film contains two or more components corresponding to the polypropylene resin A, the total of these components is regarded as the content of the polypropylene resin A in the film. The ratio of the branched polypropylene resin in the entire film is preferably 0.1% by mass or more and 30% by mass or less, and the upper limit thereof is more preferably 10% by mass, and still more preferably 5% by mass. When the film contains two or more components corresponding to the branched polypropylene resin, the total of these components is regarded as the content of the branched polypropylene resin in the film.

The polypropylene film of the present invention preferably has a differential distribution value of 1.0% or more and 10% or less when the logarithmic molecular weight Log (M) is 6.5 in a molecular weight distribution curve measured by gel permeation chromatography. The upper limit thereof is more preferably 8.0%, and still more preferably 6.0%. The differential distribution value when the logarithmic molecular weight Log (M) is 6.5 is 1.0% or more, whereby a high-molecular-weight component to be a tie molecule during stretching is sufficiently present, and uniformity during stretching is enhanced. In contrast, the differential distribution value when the logarithmic molecular weight Log (M) is 6.5 is 10% or less, whereby molecular chains that are relaxed when the polypropylene film is heated are reduced, and the thermal shrinkage is reduced. In addition, after the polypropylene film is wound up as a roll, normal temperature shrinkage over time is also suppressed, and the flatness of the film roll is maintained.

The layer structure of the polypropylene film of the present invention is not particularly limited, and the polypropylene film can have either a single layer structure or a laminated structure. The polypropylene film of the present invention preferably has at least two layers containing a polypropylene resin as a main component from the viewpoint of satisfying mutually different characteristics such as heat resistance, rigidity, and lubricity. For example, when layers containing a polypropylene resin as a main component are defined as a surface layer (I) and a base layer (II), in the case of a laminated structure of the polypropylene film having these layers, it is preferable that the polypropylene film itself contains a polypropylene resin as a main component, and the base layer (II) described later contains a polypropylene resin as a main component. When the polypropylene film has a laminated structure, it is more preferable to have at least two layers containing a polypropylene resin as a main component. The "layer containing a polypropylene resin as a main component" refers to a layer containing a polypropylene resin in an amount of more than 50% by mass and 100% by mass or less based on 100% by mass of all components constituting the layer. It is to be noted that the determination as to whether the layer corresponds to the "layer containing a polypropylene resin as a main component" is made not for a plurality of layers collectively but for each layer. In the case of a two-layer structure, a layer having a larger lamination thickness out of two layers is regarded as the base layer (II) .

The polypropylene film of the present invention may contain only one type of polypropylene resin, but preferably contains two or more types of polypropylene resins. When two or more components corresponding to a polypropylene resin are contained in the layer, if the total amount of these components is more than 50% by mass and 100% by mass or less, the layer is regarded as a "layer containing a polypropylene resin as a main component".

The content of the polypropylene resin in the "layer containing a polypropylene resin as a main component" is more preferably 90% by mass or more and 100% by mass or less, still more preferably 95% by or more and 100% by mass or less, still more preferably 96% by mass or more and 100% by mass or less, particularly preferably 97% by mass or more and 100% by mass or less, and most preferably 98% by mass or more and 100% by mass or less based on 100% by mass of all components constituting the layer. When the polypropylene film of the present invention has a single-layer structure, the main component of the polypropylene film itself is a polypropylene resin. When the polypropylene film has a laminated structure, the main component of the base layer (II) described later is preferably a polypropylene resin.

The polypropylene film of the present invention is preferably obtained by forming the polypropylene described above into a sheet and biaxially stretching the sheet. As a method of biaxial stretching, any of inflation simultaneous biaxial stretching, tenter simultaneous biaxial stretching, and sequential biaxial stretching using a roll stretching machine and a tenter can be employed. Among these methods, sequential biaxial stretching using a roll stretching machine and a tenter is preferably employed in terms of controlling film formation stability, thickness uniformity, and high rigidity, and dimensional stability of the film.

Next, one aspect of the method for producing a polypropylene film of the present invention will be described by taking a two-type three-layer polypropylene film as an example, but the polypropylene film of the present invention is not necessarily limited thereto.

First, a polypropylene resin A and a branched polypropylene resin are dry-blended, for example, at a mass ratio of 95 : 5, and supplied to a single-screw extruder for the base layer (II) (hereinafter, may be referred to as B layer), and the polypropylene resin A and poly(4-methylpentene)-1-based resin are supplied to a single-screw extruder for the surface layer (I) (hereinafter, may be referred to as A layer), for example, at a mass ratio of 98 : 2. Thereafter, melt extrusion is performed at 200 to 280°C, more preferably 220 to 280°C, and still more preferably 240 to 270°C. Then, foreign matters, a modified polymer, and the like are removed from the extruded resins by a filter installed in the middle of the polymer tube. Then, the resulting resins are layered to form a laminate by a multi-manifold type A layer/B layer/A layer composite T die. The laminate is discharged onto a casting drum to be cooled and solidified, thereby obtaining an unstretched laminate sheet having a layer structure of A layer/B layer/A layer. In this case, for a lamination thickness ratio, when the lamination thickness ratio of A layer/B layer/A layer is represented as 1/X/1, X is preferably 8 or more and 60 or less, more preferably 15 or more and 55 or less, and still more preferably 20 or more and 50 or less. In the case of having a layer structure of A layer/B layer, when the lamination thickness ratio of A layer/B layer is represented as 1/X, X is preferably 4 or more and 60 or less, more preferably 7 or more and 55 or less, and still more preferably 10 or more and 50 or less. Within the above range, uniform and fine protrusions made of the poly(4-methylpentene)-1-based resin are formed on the film surface, and lubricity can be imparted. In addition, the layer structure may be a two-type two-layer laminated structure of A layer/B layer as long as the effect of the present invention is not impaired.

The surface temperature of the casting drum is 10 to 40°C, preferably 15 to 33°C, more preferably 15 to 30°C, particularly preferably 15 to 25°C, and most preferably 20 to 25°C. As a method for bringing the film into close contact with the casting drum, any technique such as an electrostatic application method, an adhesion method based on the surface tension of water, an air knife method, a press roll method, and an underwater casting method may be used. It is preferable to use an air knife method, which can impart good flatness and enables control of the surface roughness. From the viewpoint of cooling the non-cooling drum surface side of the sheet on the casting drum, it is preferable to lower the air temperature of the air knife. The air temperature of the air knife is preferably 10 to 40°C, more preferably 15 to 30°C, still more preferably 15 to 25°C, and particularly preferably 20 to 25°C. The air speed is preferably 130 to 150 m/s. In addition, in order not to cause vibration of the sheet, it is also preferable to appropriately adjust the position of the air knife so that the air flows to the downstream side of the film formation. In the case of the two-type two-layer laminated structure of A layer/B layer, it is preferable to set the A layer side to the casting drum side.

The obtained unstretched sheet is introduced into a longitudinal stretching step. In the longitudinal stretching step, an unstretched sheet is brought into contact with a metal roll maintained at 110°C or more and 150°C or less, preferably 120°C or more and 150°C or less, and more preferably 130°C or more and 150°C or less to be preheated, stretched 4.6 to 7.0 fold, more preferably 5.2 to 6.8 fold, and still more preferably 5.5 to 6.5 fold in the longitudinal direction between rolls having a peripheral speed difference, and cooled to room temperature. At this time, the interval (stretching section) between the two rolls having a peripheral speed difference is preferably 200 mm or more, more preferably 250 mm or more, and still more preferably 300 mm or more. The upper limit of the stretching section is preferably 1000 mm. The longitudinal stretching is performed by utilizing a peripheral speed difference between the two metal rolls. However, the films conveyed on the metal rolls before and after stretching are pressed on the metal rolls using nip rolls, whereby the film is less likely to slip on the metal rolls. The stretching section refers to a distance between the nip position of the metal roll before stretching and the nip position of the metal roll after stretching.

The stretching is preferably performed at a temperature (longitudinal stretching temperature) of the roll having a peripheral speed difference of 80°C or more and 130°C or less. The longitudinal stretching temperature is more preferably 80°C or more and 125°C or less, and still more preferably 80°C or more and 120°C or less. In addition, it is preferable that radiation heaters are disposed on the upper surface side and the lower surface side of the two rolls having a peripheral speed difference, and the sheet is stretched while being heated from both surfaces. The power of the radiation heater is preferably 1.0 kW or more, more preferably 2.0 kW or more, and still more preferably 2.6 kW or more in both the upper and lower surfaces. The distance between the heat source of the radiation heater and the sheet surface is preferably 10 mm or more and 200 mm or less. The roll in the preheating step of the longitudinal stretching and the roll for providing the peripheral speed difference are set at a low temperature to suppress the relaxation of the molecular chain of the polypropylene resin as much as possible, and heated at once with a radiation heater and simultaneously stretched, whereby it is possible to perform stretching more uniformly even in the present formulation with fewer high-molecular-weight components. In addition, lengthening the stretching section increases neck-down during stretching, and the film is uniformly highly oriented. Therefore, it is effective for improving the Young's modulus of the resulting polypropylene film in the direction orthogonal to the main orientation direction.

Subsequently, the uniaxially stretched film obtained in the longitudinal stretching step is guided to a tenter with both ends of the film in the width direction gripped with clips and preheated, and then laterally stretched 8.5 to 14 fold, more preferably 9.0 to 13 fold, and still more preferably 9.5 to 12 times in the width direction. The preheating temperature is preferably 165 to 180°C, more preferably 168 to 180°C, and still more preferably 170 to 180°C. The stretching temperature is preferably 148 to 165°C, more preferably 148 to 160°C, and still more preferably 148 to 155°C. The preheating temperature is higher than the stretching temperature by 5°C or more, preferably 8°C or more, more preferably 10°C or more, whereby highly oriented stretching can be uniformly performed over the entire width of the film, leading to improvement in tensile elongation and reduction in crystallite size. The uniaxially stretched film has large neck-down and thus has a narrow width, and the lateral stretching ratio can be increased even when the film is laterally stretched in a normal tenter rail pattern. Therefore, such stretching is preferable from the viewpoint of improving heat resistance.

In the subsequent heat treatment and relaxation treatment steps, heat setting is performed at a temperature of 165°C or more and less than 180°C, preferably 168°C or more and less than 180°C, and more preferably 170°C or more and less than 180°C while relaxation is applied to the film at a relaxation rate of 12 to 20%, preferably 14 to 20%, and more preferably 16 to 20% in the width direction while the film is tensely gripped in the width direction with clips. The film undergoes a cooling step at 80 to 100°C while being tensely gripped in the width direction with the clips, and then guided to the outside of the tenter. The clips at the ends of the polypropylene film thus obtained is released, the edges of the film are slit in a winder step, and the polypropylene film is wound up as a product roll. The heat treatment temperature is higher than the lateral stretching temperature by 5°C or more, more preferably 8°C or more, and still more preferably 10°C or more, whereby the residual stress in the polypropylene film can be relaxed to thereby reduce the thermal shrinkage and improve the tensile elongation.

In addition, when the polypropylene film discharged from the tenter passes through the winding process, it is preferable to heat the film with a hot roll from the viewpoint of improving heat resistance and tensile elongation. The heating temperature is preferably 80 to 120°C, and more preferably 90 to 110°C. At a temperature of 120°C or more, the lubricity between the hot roll and the polypropylene film is impaired to cause formation of wrinkles, leading to deterioration of flatness. The heating time is preferably 0.2 seconds or more, more preferably 0.4 seconds or more, and still more preferably 0.5 seconds or more. The upper limit of the heating time is not particularly limited, but is about 2.0 seconds from the viewpoint of productivity.

The polypropylene film of the present invention obtained as described above can be used in various industrial applications such as a packaging film, a surface protective film, a film for processes, a sanitary product, an agricultural product, a building product, a medical product, and a capacitor film, and can be preferably used as a packaging film, a surface protective film, a film for processes, and a release film, because it is particularly excellent in heat resistance, mechanical strength, and quality. Herein, the surface protective film refers to a film that is attached to an object such as a molded body or a film, and has a function of preventing scratches, contamination, and the like generated during processing or transportation. The film for processes refers to a film that is attached to an object such as a molded body or a film to be prevented from scratches, contamination, and the like generated during producing or processing, and discarded when the final product is used. The release film refers to a film having high mold-releasing property, and having a function of preventing scratches, contamination, and the like generated during processing or transportation by being attached to an object such as a molded body or a film, and capable of being easily peeled and discarded when the final product is used. The packaging film refers to a film used when an article is wrapped in order to improve the quality, storage efficiency, and convenience at the time of use of articles such as foods.

EXAMPLES

Hereinafter, the present invention will be described in more detail with reference to Examples. The characteristics were measured and evaluated by the following methods.

(1) Film thickness

The thickness of a film was measured using a micro thickness meter (manufactured by Anritsu Corporation). A polypropylene film was sampled in a 10 cm square and measured at randomly selected five points, and the average value of the obtained values was taken as the film thickness ($\mu$m).

(2) tan$\delta$ (loss tangent)

A rectangular test piece (width: 5 mm × length: 20 mm) cut out from a polypropylene film with the main orientation direction thereof as a long side was attached to chuck parts of the apparatus in a nitrogen atmosphere at 23°C. The test piece was once cooled to a low temperature of -100°C, and tan$\delta$ until the temperature reached 180°C from -100°C after the start of temperature rise was measured under the following apparatus and conditions. A viscoelasticity-temperature curve was drawn by a dynamic viscoelasticity method, and Dmax, Dmin, and $L_p$ were determined using tan$\delta$ at each temperature as shown in Figs. 1 and 2. The test was performed with n = 3, and the average values of the obtained values were taken as Dmax, Dmin, and $L_p$ of the polypropylene film, respectively.

<Apparatus and measurement conditions>

Apparatus: Rheogel-E4000 (manufactured by UBM)
Geometry: Tensile
Distance between chucks: 10 mm
Frequency: 10 Hz
Strain: 0.1 to 0.2%
Temperature range: -100°C to 180°C
Heating rate: 5°C/min
Measurement atmosphere: Nitrogen.

(3) Young's modulus

A rectangular sample having a length of 150 mm (measurement direction) × 10 mm was cut out from the polypropylene film with an optional direction as the measurement direction. The sample was set in a tensile tester ("TENSILON (registered trademark) UCT-100 manufactured by Orientec Co., Ltd.) so as to be pulled in the measurement direction at an initial distance between chucks of 50 mm. Then, a tensile test of the film was performed at a tensile speed of 300 mm/min. The Young's modulus was calculated according to the method specified in JIS K7161 (2014). The same measurement was performed five times, and the average value of the obtained values was taken as the Young's modulus of the sample in the measurement direction. Next, the measurement direction was set to 0°, the Young's modulus was similarly measured in each direction forming an angle of 0° to 175° at intervals of 5° with respect to the measurement direction, and a direction showing the highest value was defined as the main orientation direction.

(4) Tensile elongation in main orientation direction at room temperature

A rectangular sample having a length of 150 mm (main orientation direction) × 10 mm was cut out from the polypropylene film. The sample was set in a tensile tester ("TENSILON" (registered trademark) UCT-100 manufactured by Orientec Co., Ltd.) at an initial distance between chucks of 50 mm. A tensile test of the film was performed at room temperature and a tensile speed of 300 mm/min. The tensile elongation was calculated according to the method specified in JIS K7161 (2014). The measurement was performed five times for each sample, and the average value of the obtained values was taken as the tensile elongation of the sample in the main orientation direction.

(5) Tensile elongation in direction orthogonal to main orientation direction at 90°C

A rectangular sample having a length of 150 mm (direction orthogonal to the main orientation direction) × a width of 10 mm was cut out from the polypropylene film. The sample with chucks was placed in an oven heated at 90°C for 1 minute, and the sample was set in a tensile tester ("TENSILON (registered trademark) UCT-100 manufactured by Orientec Co., Ltd.) so as to be pulled in the width direction at an initial distance between chucks of 50 mm. Then, a tensile test of the film was performed at a tensile speed of 300 mm/min. The tensile elongation was calculated according to the method specified in JIS K7161 (2014). The same measurement was performed five times, and the average value of the obtained values was taken as the tensile elongation of the sample at 90°C in the direction orthogonal to the main orientation direction.

(6) Crystallite sizes of α(110) in main orientation and direction orthogonal to main orientation direction

A polypropylene film was cut into strips each having a length of 4 cm (main orientation direction) and a width of 1 mm (direction orthogonal to the main orientation direction), and the strips were stacked so that the product would have a thickness of 1 mm to prepare a sample. The sample was placed between an X-ray source and a detector so that the X-ray was transmitted through the sample surface, an angle (2θ/θ) between the X-ray source and the detector was scanned symmetrically with respect to the film surface, and the X-ray diffraction was measured. In the obtained diffraction profile, the crystallite size in the main orientation direction was determined from the half-value width βe of the crystal peak at 2θ = about 14° (α crystal (110) plane) using the following Formulas (1) and (2). In addition, the crystallite size in the direction orthogonal to the main orientation direction was similarly determined for a strip-shaped polypropylene film having a length of 4 cm (direction orthogonal to the main orientation direction) and a width of 1 mm (main orientation direction). The measuring apparatus and conditions were as follows.

[Mathematical formula 1]

$$Crystallite\ size = \frac{K\lambda}{\beta \cos\theta} \quad \cdots \quad (1)$$

[Mathematical formula 2]

$$\beta = \sqrt{\beta_e{}^2 + \beta_0{}^2} \quad \cdots \quad (2)$$

wherein λ: X-ray wavelength (= 0.15418 nm), βe: half-value width of diffraction peak, βo: correction value of half-value width (= 0.6), and K: Scherrer constant (= 1.0).

(Measuring apparatus)

· X-ray diffractometer: D8 ADVANCE (enclosed tube type) manufactured by Brucker AXS GmbH
· X-ray source: CuKα ray
· Output: 40 kV - 40 mA
· Slit system: DS = 0.3°
· Detector: LynxEye (high-speed detector)
· Scan: 2θ-θ continuous scan
· Measuring range: 2θ = 5° to 80°
· Step width: 0.02°
· Scan speed: 1 sec/step.

(7) Crystallization temperature $T_{c0}$ determined by extrapolation point method

Using a differential scanning calorimeter (EXSTAR DSC6220 manufactured by Seiko Instruments Inc.), 3 mg of a polypropylene film was heated from 25°C to 250°C at 20 °C/min in a nitrogen atmosphere, and held for 5 minutes. Subsequently, the temperature was lowered from 250°C to 25°C at 10 °C/min, and the peak temperature of the exothermic curve obtained at this temperature lowering was defined as $Tc_{10}$. Thereafter, the polypropylene film was heated from 25°C to 250°C at 20 °C/min and held for 5 minutes. Subsequently, the temperature was lowered from 250°C to 25°C at 40 °C/min, and the peak temperature of the exothermic curve obtained at this temperature lowering was defined as $Tc_{40}$. Then, as shown in Fig. 3, the cooling rate was plotted on the horizontal axis, the crystallization temperature obtained at each cooling rate was plotted on the vertical axis, a straight line was drawn from $Tc_{40}$ toward $Tc_{10}$, and the crystallization temperature when the cooling rate was extrapolated to 0 °C/min was defined as $Tc_0$. When a plurality of peak temperatures were observed in the measurement of $Tc_{10}$ and $Tc_{40}$, the temperature of the highest peak in the range of 80°C to 130°C was used as the crystallization temperature of the polypropylene film. The measurement was performed three times for each sample, and the average value thereof was used for evaluation.

(8) Melting point Tm

Using a differential scanning calorimeter (EXSTAR DSC6220 manufactured by Seiko Instruments Inc.), 3 mg of a polypropylene film was heated from 25°C to 250°C at 20 °C/min in a nitrogen atmosphere, and the peak temperature of an endothermic curve obtained during heating was defined as Tm (°C). The measurement was performed three times for each sample, and the average value of the obtained values was taken as Tm (°C) of the polypropylene film.

(9) Coefficient of static friction μs in direction orthogonal to main orientation direction after heat treatment at 90°C for 10 minutes

A polypropylene film was cut out into a width of 6.5 cm (film main orientation direction) and a length of 12 cm (direction orthogonal to the film main orientation direction) to prepare a test piece, and the test piece was sandwiched between paper sheets. The test piece was heated in an oven maintained at 130°C for 10 minutes with a load of 0, then taken out, cooled at room temperature, and then measured at 25°C and 65% RH in accordance with JIS K 7125 (1999) using a slip tester manufactured by Toyo Seiki Seisaku-sho, Ltd. The measurement was performed in such a manner that different surfaces (front and back surfaces) of films are stacked with each other in the direction orthogonal to the main orientation direction of the films, that is, so that the front surface of one film and the back surface of the other film were stacked in contact with each other. The same measurement was performed five times for each sample, and the average value of the obtained values was calculated and taken as the coefficient of static friction (μs) of the polypropylene film.

(10) Melt tension

Measurement was performed under the following conditions using an apparatus according to JIS K 7199 (1999).

· Apparatus: Capillograph 1BPMD-i with a melt tension tester (manufactured by Toyo Seiki Seisaku-sho, Ltd.)
· Temperature: 230°C (heat retaining chamber used)
· Die: L = 8 (mm), D = 2.095 (mm)
· Extrusion speed: 20 mm/min
· Take-up speed: 15.7 m/min
· Mass of sample: 15 to 20 g.

(11) Flatness during film heating

An acrylic adhesive ("SK Dyne" (registered trademark) 1310 manufactured by Soken Chemical & Engineering Co., Ltd.) was diluted with ethyl acetate, toluene, and methyl ethyl ketone (MEK), and 2.0 parts by mass of a curing agent ("CORONATE" (registered trademark) D-90 manufactured by Nippon Polyurethane Industry Co., Ltd.) was mixed with the diluted adhesive based on 100 parts by mass of the solid content of the adhesive to prepare a coating agent for an adhesive layer. The coating agent was applied to one surface of a 500 mm-width polypropylene film using a gravure coater. The coated film was introduced into a drying furnace at 90°C and conveyed for 30 seconds to remove the solvent in the coating agent. Thus, an adhesive film including an adhesive layer having a thickness of 1 um was obtained. Thereafter, the adhesive film was wound up as an adhesive film roll having a winding length of 200 m. Then, the adhesive film having a width of 500 mm was unwound by 1 m and subjected to a free tension (in a state of being suspended in the vertical direction by the weight of the film). Tensions of 1 kg/m and 3 kg/m were uniformly applied to the entire film width without unevenness, and the presence or absence of a poor flatness portion such as wrinkles and dents was visually confirmed. The evaluation was performed according to the following criteria.

S: No portion with poor flatness was observed at the free tension.
A: A portion with poor flatness was observed at the free tension, but the portion with poor flatness disappeared at a tension of 1 kg/m width.
B: A portion with poor flatness was observed at a tension of 1 kg/m width, but the portion with poor flatness disappeared at a tension of 3 kg/m width.
C: A portion with poor flatness was observed even at a tension of 3 kg/m width.

(12) Breakage characteristics when high tension is applied to film

A polypropylene film having a width of 500 mm was introduced into a drying furnace at 90°C. Tension applied to the polypropylene film was raised to a predetermined level at a rate of 100 N/sec, and after the tension reached the predetermined level, the polypropylene film was conveyed under the tension for 30 seconds. Then, whether the polypropylene film was broken or not was visually checked.

S: The film was not broken even at a tension of 400 N or more.
A: The film was broken at a tension of 300 N or more and less than 400 N.
B: The film was broken at a tension of 200 N or more and less than 300 N.
C: The film was broken at a tension of less than 200 N.

(13) Differential distribution value and molecular weight distribution Mz/Mw when logarithmic molecular weight Log (M) is 6.5

A polypropylene film was dissolved by stirring at 165°C for 30 minutes using 1,2,4-trichlorobenzene as a solvent. Thereafter, the mixture was filtered using a 0.5 um filter, the molecular weight distribution of the filtrate was measured, and the differential distribution value when the logarithmic molecular weight Log (M) was 6.5 was read.
In addition, the weight average molecular weight Mw and the Z average molecular weight Mz of the sample were determined using a molecular weight calibration curve prepared using the following standard sample.

· Apparatus: High-temperature GPC device PL-GPC220 manufactured by Agilent Technologies, Inc.
· Detector: Differential refractive index detector (RI detector) manufactured by Agilent Technologies, Inc.
· Column: PL1110-6200 (20 um MIXED-A) $\times$ 2, manufactured by Agilent Technologies, Inc.
· Flow rate: 1.0 mL/min
· Column temperature: 145°C
· Injection volume: 0.500 mL
· Sample concentration: 0.1 wt%
· Standard sample: Monodisperse polystyrene manufactured by Tosoh Corporation, dibenzyl manufactured by Tokyo Chemical Industry Co., Ltd.

(14) Cold xylene soluble component (CXS)

For a polypropylene resin in a case of a raw material, 0.5 g was dissolved in 100 ml of xylene at 135°C and allowed to cool, and then recrystallized in a thermostatic water bath for 1 hour at 20°C, and then the polypropylene-based component dissolved in a filtrate was quantified by liquid chromatography. Assuming that the amount of the polypropylene-based component dissolved in the filtrate was set as X (g) and the fine amount value of 0.5 g of the sample was set as X0 (g), CXS was calculated by the following formula.

$$\text{Formula: CXS (\% by mass)} = (X/X0) \times 100.$$

(15) Maximum height (St)

The measurement was performed using "VertScan" (registered trademark) 2.0R5300 GL-Lite-AC manufactured by Ryoka Systems Inc., and the surface shape was obtained by surface correction of the imaging screen with polynomial quartic approximation using the attached analysis software. The maximum height (St) indicates a difference between the maximum height value (peak) and the minimum height value (valley) in the measurement area. The measurement conditions were as follows. The measurement was performed for each of both surfaces of the film at n = 3 (the number of measurements = 3), and the average value of each surface was obtained, thereby adopting the St of each surface. The larger value of the values of St of both surfaces of the film is described in the table.

· Apparatus: "VertScan" (registered trademark) 2.0 R5300GL-Lite-AC manufactured by Ryoka Systems Inc.
· Measurement conditions: CCD camera SONY HR-57 1/2 inch
· Objective lens: 5 $\times$
· Intermediate lens: 0.5 $\times$
· Wavelength filter: 530 nm white
· Measurement mode: Wave

· Measurement software: VS-Measure Version 5.5.1
· Analysis software: VS-Viewer Version 5.5.1
· Measurement area: 1.252 mm $\times$ 0.939 mm.

(Polypropylene resin and the like)

Polypropylene resins having molecular weight distributions Mz/Mw and CXS shown in Table 1 below were used for production of polypropylene films of Examples and Comparative Examples. These values are values evaluated in the form of resin pellets. Three types of resins were prepared as polypropylene resin A, and two types of resins were prepared as other polypropylene resins. As the branched polypropylene resin, the following resins were used.

Polypropylene resin 1 (PP1): Manufactured by Prime Polymer Co., Ltd.

Polypropylene resin 2 (PP2): Manufactured by Prime Polymer Co., Ltd.

Polypropylene resin 3 (PP3): Manufactured by Sumitomo Chemical Co., Ltd.

Polypropylene resin 4 (PP4): Manufactured by Prime Polymer Co., Ltd.

Polypropylene resin 5 (PP5): Manufactured by Prime Polymer Co., Ltd.

Branched polypropylene resin 1 (branched PP1): Ziegler-Natta catalyst-based branched polypropylene resin (PF-814, manufactured by Basell, melt tension: 15 gf, MFR: 3.0)

Branched polypropylene resin 2 (branched PP2): Metallocene catalyst-based branched polypropylene resin ("WAYMAX" (registered trademark) MFX6, manufactured by Japan Polypropylene Corporation, melt tension: 13 gf, MFR: 3.0).

[Table 1]

| Type | | Mz/Mw | CXS | MFR | differential distribution value of when Log (M) =6.5 |
|---|---|---|---|---|---|
| PP raw material A | PP1 | 2.8 | 1.9% | 3.0 | 4.9 |
| | PP2 | 3.3 | 2.7% | 2.0 | 6.3 |
| | PP3 | 4.3 | 1.1% | 7.0 | 8.2 |
| PP4 | | 4.7 | 0.8% | 7.0 | 13.1 |
| PP5 | | 5.8 | 4.5% | 4.0 | 15.0 |

Polypropylene raw material D: Polypropylene resin 2 and 4-methyl-1-pentene-based polymer 1 (described later) were supplied from a weighing hopper to a twin-screw extruder so as to be 90 : 10 (mass ratio), melt-kneaded at 260°C, a molten resin composition was discharged from a die into a strand shape, cooled and solidified in a water bath at 25°C, and cut into a chip shape.

Polypropylene raw material E: Polypropylene resin 3 and 4-methyl-1-pentene-based polymer 2 (described later) were supplied from a weighing hopper to a twin-screw extruder so as to be 90 : 10 (mass ratio), melt-kneaded at 260°C, a molten resin composition was discharged from a die into a strand shape, cooled and solidified in a water bath at 25°C, and cut into a chip shape.

4-Methyl-1-pentene-based polymer 1: MX004 manufactured by Mitsui Chemicals, Inc.

(Example 1)

As a raw material of the surface layer (I), the polypropylene resin 2 and the polypropylene raw material D were dry-blended at 80 : 20 (mass ratio) and supplied to a single-screw extruder for the surface layer (I). As a raw material for the base layer (II), the polypropylene resin 1 and the branched polypropylene resin 1 were dry-blended at 95 : 5 (mass ratio) and supplied to a single-screw extruder for the base layer (II). Each resin mixture was melt-extruded at 260°C, and foreign matters were removed from the extruded resins with a sintered filter of 20 um cut. Thereafter, the resulting resins were layered to form a laminate with a feedblock A/B/A composite T die so that the surface layer (I)/base layer (II)/surface layer (I) had a thickness ratio of 1/30/1. The laminate was discharged to a casting drum with the surface temperature controlled at 25°C, and brought into close contact with the casting drum by blowing air at a speed of 140m/s and a temperature of 20°C with an air knife. Thereafter, pressurized air at 20°C was injected at an air speed of 140 m/s and blown onto the non-cooling drum surface of the sheet on the casting drum to cool the sheet, thus obtaining an unstretched sheet. Subsequently, the unstretched sheet was preheated to 135°C with a ceramic roll, and the sheet was stretched by 5.7 fold in the longitudinal direction while being heated at 108°C from both surfaces by a radiation heater between rolls having a peripheral speed difference. The heat source of the radiation heater was fixed at a position of a distance of 90 mm from the sheet surface. The distance between rolls having a peripheral speed difference was 320 mm, and the power of the radiation heater was set to 2.8 kW. Then, the obtained uniaxially stretched film was introduced into a tenter stretching machine with both ends of the film in the width direction gripped with clips, preheated at 176°C for 3 seconds, then stretched by 9.8 fold in the width direction at 153°C, and heat-treated at 178°C while being relaxed by 20% in the width direction. Thereafter, the film was guided to the outside of the tenter through a cooling step at 100°C, the clips at both ends in the film width direction were released, the film was heated with a hot roll at 110°C for 1.8 seconds through the winding process, and then wound around the core to obtain a polypropylene film having a thickness of 24 um. The physical properties and evaluation results of the obtained film are shown in Table 2.

(Examples 2 to 5, Comparative Examples 1 to 4)

A polypropylene film was obtained in the same manner as in Example 1 except that the raw material composition and film formation conditions of each layer were as shown in Table 2. In this case, the thickness was adjusted by adjusting the discharge amount in extrusion and adjusting the speed of the casting drum. The physical properties and evaluation results of the obtained film are shown in Table 2. The raw materials of the surface layer were mixed such that the polypropylene resin 2 and the polypropylene raw material D were dry-blended at 80 : 20 (mass ratio) in the same manner as in the surface layer (I) of Example 1 in the surface layer (I) of Comparative Example 2, and the polypropylene resin 3 and the polypropylene raw material E were dry-blended at 70 : 30 (mass ratio) in the surface layer (I) of Example 4. In the surface layer (I) and the base layer (II) of other Examples, the polypropylene raw materials D and E were not used, and each resin component was dry-blended at the ratio in Table 2. In Example 4, the surface layer (I) side was brought into contact with a cast roll.

[Table 2-1]

| Item | | | Example 1 | Example 2 | Example 3 | Example 4 | Example 5 |
|---|---|---|---|---|---|---|---|
| Surface layer (I) | PP resin A | PP1 (parts by mass) | - | - | - | - | - |
| | | PP2 (parts by mass) | 98 | - | - | - | - |
| | | PP3 (parts by mass) | - | - | - | 97 | - |
| | PP resin | PP4 (parts by mass) | - | - | - | - | - |
| | | PP5 (parts by mass) | - | 95 | - | - | 100 |
| | Branched PP resin | Branched PP1 (parts by mass) | - | 5 | - | - | - |
| | | Branched PP2 (parts by mass) | - | - | - | - | - |
| | 4-Methyl-1-pentene-based polymer 1 (parts by mass) | | 2 | - | - | 3 | - |

(continued)

| Item | | | Example 1 | Example 2 | Example 3 | Example 4 | Example 5 |
|---|---|---|---|---|---|---|---|
| Base layer (II) | PP resin A | PP1 (parts by mass) | 95 | - | 97 | - | - |
| | | PP2 (parts by mass) | - | - | - | 50 | 95 |
| | | PP3 (parts by mass) | - | 100 | - | 50 | - |
| | PP resin | PP4 (parts by mass) | - | - | - | - | - |
| | | PP5 (parts by mass) | - | - | - | - | 5 |
| | Branched PP resin | Branched PP1 (parts by mass) | 5 | - | - | - | - |
| | | Branched PP2 (parts by mass) | - | - | 3 | - | - |

(continued)

| Item | | | Example 1 | Example 2 | Example 3 | Example 4 | Example 5 |
|---|---|---|---|---|---|---|---|
| Film formation conditions | | Melt extrusion temperature (°C) | 260 | 260 | 260 | 260 | 260 |
| | | Lamination ratio (Surface layer (I)/ base layer (II)/surface layer (I))/ (surface layer (I)/base layer (II)) | 1/30/1 | 1/10/1 | single layer | 1/20 | 1/18/1 |
| | | Casting drum temperature (°C) | 25 | 18 | 38 | 32 | 38 |
| | | Air temperature (°C) | 20 | 28 | 38 | 32 | 42 |
| | Stretching in longitudinal direction | Preheating temperature (°C) | 135 | 120 | 118 | 135 | 112 |
| | | Stretching temperature (°C) | 108 | 120 | 128 | 115 | 125 |
| | | Magnification (times) | 5.7 | 6.2 | 4.8 | 5.2 | 5.7 |
| | | Stretching section (mm) | 320 | 220 | 260 | 320 | 400 |
| | | Radiation heater power (kW) | 2.8 | 1.5 | 2.5 | 3.2 | 0.8 |
| | Stretching in width direction | Preheating temperature (°C) | 176 | 166 | 178 | 175 | 168 |
| | | Stretching temperature (°C) | 153 | 160 | 170 | 157 | 160 |
| | | Stretching ratio (times) | 9.8 | 10.2 | 8.7 | 9.3 | 11.8 |
| | Heat treatment | Heat treatment temperature (°C) | 178 | 169 | 166 | 175 | 167 |
| | | Relaxation rate (%) in width direction | 20 | 15 | 13 | 18 | 13 |
| | | Cooling temperature (°C) | 100 | 90 | 80 | 100 | 100 |
| | Heating through winding process | Temperature (°C) | 110 | 85 | Untreated | 117 | 92 |
| | | Time (sec) | 1.8 | 0.4 | | 0.7 | 0.5 |
| | | Thickness ($\mu$m) | 24 | 12 | 18 | 20 | 25 |
| $M_z / M_w$ | | | 3.3 | 4.4 | 2.9 | 3.9 | 3.6 |
| Differential distribution value of when Log (M) = 6.5 (%) | | | 5.3 | 8.3 | 2.6 | 7.1 | 6.7 |
| (Dmax - Dmin) /Dmax | | | 0.15 | 0.27 | 0.29 | 0.23 | 0.28 |
| Tensile elongation in direction orthogonal to main orientation direction at 90°C (%) | | | 135 | 75 | 115 | 100 | 85 |

(continued)

| Item | Example 1 | Example 2 | Example 3 | Example 4 | Example 5 |
|---|---|---|---|---|---|
| Temperature at which tanδ is equal to Lp (°C) | 48 | 67 | 77 | 57 | 73 |
| α(110) crystallite size (nm) | 14.2 | 19.3 | 21.1 | 17.9 | 19.8 |
| $Tc_0$ + Tm (°C) | 292 | 288 | 297 | 278 | 275 |
| μs (-) after heating at 90°C | 0.48 | 0.65 | 0.82 | 0.53 | 0.93 |
| Tensile elongation (%) in main orientation direction | 43 | 37 | 68 | 55 | 41 |
| Maximum height St (μm) | 0.6 | 0.4 | 1.5 | 1.0 | 2.2 |
| Flatness during heating | S | A | B | S | B |
| Breakage characteristics when high tension is applied | S | B | S | A | B |

[Table 2-2]

| Item | | | Comparative Example 1 | Comparative Example 2 | Comparative Example 3 | Comparative Example 4 |
|---|---|---|---|---|---|---|
| Surface layer (I) | PP resin A | PP1 (parts by mass) | - | - | 95 | - |
| | | PP2 (parts by mass) | - | 98 | - | - |
| | | PP3 (parts by mass) | - | - | - | - |
| | PP resin | PP4 (parts by mass) | - | - | - | - |
| | | PP5 (parts by mass) | - | - | - | - |
| | Branched PP resin | Branched PP1 (parts by mass) | - | - | - | - |
| | | Branched PP2 (parts by mass) | - | - | 5 | - |
| | 4-Methyl-1-pentene-based polymer 1 (parts by mass) | | | 2 | | |

(continued)

| | Item | | Comparative Example 1 | Comparative Example 2 | Comparative Example 3 | Comparative Example 4 |
|---|---|---|---|---|---|---|
| Base layer (II) | PP resin A | PP1 (parts by mass) | - | - | - | - |
| | | PP2 (parts by mass) | - | - | - | - |
| | | PP3 (parts by mass) | - | - | 30 | 100 |
| | PP resin | PP4 (parts by mass) | - | 100 | 70 | - |
| | | PP5 (parts by mass) | 100 | - | - | - |
| | Branched PP resin | Branched PP1 (parts by mass) | - | - | - | - |
| | | Branched PP2 (parts by mass) | - | - | - | - |

(continued)

| Item | | | Comparative Example 1 | Comparative Example 2 | Comparative Example 3 | Comparative Example 4 |
|---|---|---|---|---|---|---|
| Film formation conditions | | Melt extrusion temperature (°C) | 260 | 260 | 250 | 260 |
| | | Lamination ratio (Surface layer (I)/base layer (II)/surface layer (I))/(surface layer (I)/base layer (II)) | Single layer | 1/6/1 | 1/80/1 | Single layer |
| | | Casting drum temperature (°C) | 30 | 77 | 95 | 45 |
| | | Air temperature (°C) | 45 | 50 | 50 | 30 |
| | Stretching in longitudinal direction | Preheating temperature (°C) | 135 | 142 | 100 | 153 |
| | | Stretching temperature (°C) | 135 | 142 | 120 | 128 |
| | | Magnification (times) | 4.5 | 5.1 | 6.3 | 4.8 |
| | | Stretching section (mm) | 220 | 150 | 100 | 100 |
| | | Radiation heater power (kW) | 2.3 | 1.5 | Unused | Unused |
| | Stretching in width direction | Preheating temperature (°C) | 170 | 169 | 160 | 179 |
| | | Stretching temperature (°C) | 180 | 161 | 170 | 173 |
| | | Stretching ratio (times) | 8.2 | 8.8 | 10.8 | 9.4 |
| | Heat treatment | Heat treatment temperature (°C) | 168 | 158 | 170 | 148 |
| | | Relaxation rate (%) in width direction | 6 | 11 | 20 | 11 |
| | | Cooling temperature (°C) | 50 | 70 | 80 | 100 |
| | Heating through winding process | Temperature (°C) | 70 | Untreated | 130 | Untreated |
| | | Time (sec) | 0.2 | | 3.0 | |
| | | Thickness (μm) | 20 | 2.3 | 50 | 25 |
| Mz/Mw | | | 5.8 | 4.8 | 5.4 | 3.5 |
| Differential distribution value of when Log (M) = 6.5 (%) | | | 15.2 | 12.4 | 13.1 | 6.1 |
| (Dmax - Dmin) /Dmax | | | 0.40 | 0.33 | 0.28 | 0.32 |
| Tensile elongation in direction orthogonal to main orientation direction at 90°C (%) | | | 95 | 80 | 65 | 70 |

(continued)

| Item | Comparative Example 1 | Comparative Example 2 | Comparative Example 3 | Comparative Example 4 |
|---|---|---|---|---|
| Temperature at which tan$\delta$ is equal to Lp (°C) | 92 | 85 | 78 | 88 |
| $\alpha$(110) crystallite size (nm) | 20.4 | 22.5 | 25.6 | 21 |
| $Tc_0$ + Tm (°C) | 271 | 275 | 282 | 291 |
| $\mu$s (-) after heating at 90°C | 0.85 | 0.61 | 0.90 | 0.90 |
| Tensile elongation (%) in main orientation direction | 51 | 45 | 32 | 32 |
| Maximum height St ($\mu$m) | 1.2 | 1.7 | 7.1 | 2.3 |
| Flatness during heating | C | C | B | C |
| Breakage characteristics when high tension is applied | A | B | C | A |

Example 3 and Comparative Examples 1 and 4 had a single-layer structure and had no surface layer (I).

INDUSTRIAL APPLICABILITY

As described above, the polypropylene film of the present invention can be used in various industrial applications such as a packaging film, a surface protective film, a film for processes, a sanitary product, an agricultural product, a building product, a medical product, and a capacitor film, and can be preferably used as a surface protective film, a film for processes, and a release film because it is particularly excellent in heat resistance, mechanical strength, and quality.

**Claims**

1. A polypropylene film wherein

   a maximum value Dmax and a minimum value Dmin of tan$\delta$ in a main orientation direction within a range of -10°C or more and 50°C or less satisfy a relationship of Formula 1, and
   a tensile elongation in a direction orthogonal to the main orientation direction at 90°C is 70% or more:

$$\text{Formula 1: } 0.00 \leq (\text{Dmax} - \text{Dmin})/\text{Dmax} \leq 0.30.$$

2. The polypropylene film according to claim 1, wherein a temperature at which tan$\delta$ in the main orientation direction is equal to $L_P$ in a range of 30°C or more and less than 150°C is 80°C or less, where $L_P$ is a maximum value of tan$\delta$ in the main orientation direction at -30°C or more and less than 30°C.

3. The polypropylene film according to claim 1 or 2, wherein a sum of crystallite sizes of $\alpha$(110) in the main orientation direction and a direction orthogonal to the main orientation direction is 20.0 nm or less.

4. The polypropylene film according to any one of claims 1 to 3, wherein the polypropylene film satisfies $Tc_0$ + Tm $\geq$ 280, where $Tc_0$ (°C) is a crystallization temperature at a cooling rate of 0 °C/min determined by an extrapolation point method using a crystallization temperature $Tc_{10}$ (°C) measured at a cooling rate of 10 °C/min and a crystallization temperature $Tc_{40}$ (°C) measured at a cooling rate of 40 °C/min, and Tm (°C) is a melting point of the polypropylene film.

5. The polypropylene film according to any one of claims 1 to 4, wherein a coefficient of static friction us is 0.80 or less after heat treatment at 90°C for 10 minutes.

6. The polypropylene film according to any one of claims 1 to 5, wherein a tensile elongation in the main orientation direction is 35% or more.

7. The polypropylene film according to any one of claims 1 to 6, wherein a maximum height St of each of both surfaces of the polypropylene film is less than 2.0 um.

8. The polypropylene film according to any one of claims 1 to 7, wherein a molecular weight distribution Mz/Mw is less than 4.5.

9. The polypropylene film according to any one of claims 1 to 8, wherein a differential distribution value is 1.0% or more and 100 or less when a logarithmic molecular weight Log (M) is 6.5 in a molecular weight distribution curve measured by gel permeation chromatography.

10. The polypropylene film according to any one of claims 1 to 9, comprising at least two layers containing a polypropylene resin as a main component.

11. A process film comprising the polypropylene film according to any one of claims 1 to 10.

12. A release film comprising the polypropylene film according to any one of claims 1 to 10.

13. A surface protective film comprising the polypropylene film according to any one of claims 1 to 10.

Figure 1

Figure 2

Temperature at which Tan δ is equal to Lp

Figure 3

## INTERNATIONAL SEARCH REPORT

| | International application No. |
|---|---|
| | **PCT/JP2022/015384** |

**A. CLASSIFICATION OF SUBJECT MATTER**

*B32B 27/32*(2006.01)i; *C08J 5/18*(2006.01)i
FI: C08J5/18 CES; B32B27/32 E

According to International Patent Classification (IPC) or to both national classification and IPC

**B. FIELDS SEARCHED**

Minimum documentation searched (classification system followed by classification symbols)

C08J5/00 - 5/02, C08J5/12 - 5/22, B32B1/00 - 43/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/034182 A1 (TORAY INDUSTRIES, INC.) 22 February 2018 (2018-02-22) claims, paragraphs [0002], [0026], [0032], [0050], examples | 1-9, 11-13 |
| A | | 10 |
| X | JP 2016-187959 A (TORAY INDUSTRIES, INC.) 04 November 2016 (2016-11-04) claims, paragraphs [0002], [0014], [0034]-[0035], [0043], examples | 1-13 |
| A | JP 2020-075818 A (TORAY INDUSTRIES, INC.) 21 May 2020 (2020-05-21) entire text | 1-13 |
| A | JP 2006-130846 A (TOHCELLO CO LTD) 25 May 2006 (2006-05-25) entire text | 1-13 |
| A | JP 62-233248 A (MITSUBISHI PETROCHEMICAL CO) 13 October 1987 (1987-10-13) entire text | 1-13 |
| A | WO 2017/159103 A1 (TORAY INDUSTRIES, INC.) 21 September 2017 (2017-09-21) entire text | 1-13 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **02 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2022/015384** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2014-055276 A (TOYOBO CO LTD) 27 March 2014 (2014-03-27)<br>entire text | 1-13 |
| A | JP 2014-205799 A (OJI HOLDINGS CORP) 30 October 2014 (2014-10-30)<br>entire text | 1-13 |
| A | WO 2015/146894 A1 (TORAY INDUSTRIES, INC.) 01 October 2015 (2015-10-01)<br>entire text | 1-13 |
| A | JP 08-080564 A (TOKUYAMA CORP) 26 March 1996 (1996-03-26)<br>entire text | 1-13 |
| A | EP 0172277 A1 (MITSUBISHI PETROCHEMICAL CO) 26 February 1986 (1986-02-26)<br>whole document | 1-13 |

Form PCT/ISA/210 (second sheet) (January 2015)

**INTERNATIONAL SEARCH REPORT**
Information on patent family members

International application No.

**PCT/JP2022/015384**

| Patent document cited in search report | | | Publication date (day/month/year) | Patent family member(s) | | | Publication date (day/month/year) |
|---|---|---|---|---|---|---|---|
| WO | 2018/034182 | A1 | 22 February 2018 | EP 3502172 A1 claims, paragraphs [0002], [0026], [0032], [0051], examples | | | |
| JP | 2016-187959 | A | 04 November 2016 | (Family: none) | | | |
| JP | 2020-075818 | A | 21 May 2020 | (Family: none) | | | |
| JP | 2006-130846 | A | 25 May 2006 | (Family: none) | | | |
| JP | 62-233248 | A | 13 October 1987 | (Family: none) | | | |
| WO | 2017/159103 | A1 | 21 September 2017 | EP 3431530 A1 whole document | | | |
| JP | 2014-055276 | A | 27 March 2014 | WO 2013/111779 A1 entire text TW 201339219 A whole document CN 104105746 A whole document | | | |
| JP | 2014-205799 | A | 30 October 2014 | (Family: none) | | | |
| WO | 2015/146894 | A1 | 01 October 2015 | EP 3124523 A1 whole document | | | |
| JP | 08-080564 | A | 26 March 1996 | (Family: none) | | | |
| EP | 0172277 | A1 | 26 February 1986 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020196602 A
- JP 2014055283 A
- WO 2020137791 A
- JP 2020132882 A